Europäisches Patentamt

European Patent Office

Office européen des brevets

(19)

(11) Veröffentlichungsnummer: **0 278 251 B1**

(12) **EUROPÄISCHE PATENTSCHRIFT**

(45) Veröffentlichungstag der Patentschrift:
27.03.91 Patentblatt 91/13

(51) Int. Cl.⁵ : **A01C 17/00**

(21) Anmeldenummer: **88100488.1**

(22) Anmeldetag: **15.01.88**

(54) **Zentrifugaldüngerstreuer.**

(30) Priorität: **24.01.87 DE 3702139**

(43) Veröffentlichungstag der Anmeldung:
**17.08.88 Patentblatt 88/33**

(45) Bekanntmachung des Hinweises auf die
Patenterteilung:
**27.03.91 Patentblatt 91/13**

(84) Benannte Vertragsstaaten:
**FR GB NL SE**

(56) Entgegenhaltungen:
**DE-A- 2 031 557**
**DE-A- 2 843 487**
**DE-A- 3 122 331**
**FR-A- 2 285 319**

(73) Patentinhaber: **Amazonen-Werke H. Dreyer
GmbH & Co. KG
Am Amazonenwerk 9-13
W-4507 Hasbergen-Gaste (DE)**

(72) Erfinder: **Dreyer, Heinz, Dipl.-Ing.Univ.Dr.agr.
Am Amazonenwerk 7
W-4507 Hasbergen (DE)**

## Beschreibung

Die Erfindung betrifft einen Zentrifugaldüngerstreuer, vorzugsweise einen Anbauschleuderstreuer, gemäß des Oberbegriffes des Anspruches 1.

Ein derartiger Zentrifugaldüngerstreuer ist bereits durch die europäische Patentanmeldung 01 92 089 bekanntgeworden. Den unter dem Vorratsbehälter des Zentrifugaldüngerstreuers angeordneten, angetriebenen und als Schleuderscheiben ausgebildeten Verteilorganen werden die sich im Vorratsbehälter befindlichen Düngemittelpartikel über ein Zwangsdosierungssystem zugeführt. Dieses Zwangsdosierungssystem besteht aus einer Dosierwalze, die jeweils unter den beiden trichterförmigen Behälterteilen des Vorratsbehälters angeordnet ist, wobei die beiden Dosierwalzen auf einer gemeinsamen Antriebswelle gelagert sind. Der Antrieb dieser Antriebswelle erfolgt entweder über ein als Variatorgetriebe ausgebildetes Regelgetriebe, oder mittels eines elektrischen Antriebsmotores, so daß die Dosierwalzen immer mit der gleichen Drehzahl angetrieben werden.

Da die heutigen Zentrifugaldüngerstreuer in der Lage sind, die Düngemittelpartikel über einen Streureich von 35 bis zu 24 m oder mehr abzuschleudern, weist die Tatsache, daß den beiden Schleuderscheiben jeweils immer die gleiche Ausbringmenge zudosiert wird, Mängel hinsichtlich einer den jeweiligen Einsatzverhältnissen erforderlichen optimalen Anpassung der Düngerausbringmenge innerhalb des von dem beiden Schleuderscheiben erzeugten Streusektors auf. D.h., den beiden Schleuderscheiben können keine unterschiedlichen Ausbringmengen zugeführt werden, die zu einer optimaleren Nährstoffversorgung der zu bestreuenden Fläche führen würden, so daß es innerhalb des von den Schleuderscheiben bestreuten Streubreiches zu Fehldüngungen kommen kann.

Der Erfindung liegt daher die Aufgabe zugrunde, die Ausbringmengenregulierung beim gattungsgemäßen Düngerstreuer wesentlich zu vereinfachen und zu verbessern.

Diese Aufgabe wird erfindungsgemäß dadurch gelöst, daß das Antriebselement derart ausgebildet ist, daß jede Dosierwalze oder jedes Dosierband unabhängig voneinander antreibbar ist und daß die Dosierwalzen oder Dosierbänder mit gleicher Umfangsgeschwindigkeit oder mit verschiedenen Umfangs geschwindigkeiten unabhängig voneinander antreibbar sind. Infolge dieser Maßnahme ist es möglich, die Dosierwalzen oder Dosierbänder mit unterschiedlichen Umfangsgeschwindigkeiten anzutreiben, so daß den unter diesen Dosierelementen angeordneten Verteilorganen, entsprechend ihrer jeweiligen Antriebsdrehzahl, unterschiedliche Ausbringmengen zudosiert werden, wodurch sich die von jeder Schleuderscheibe abgeschleuderte Düngemittelmenge individuell einstellen läßt.

Das Zuführen unterschiedlicher Ausbringmengen zu den Verteilorganen eines Zentrifugaldüngerstreuers wird dadurch erreicht, daß für jede Dosierwalze oder jedes Dosierband ein eigenes regelbares Antriebselement vorgesehen ist, wobei diese Antriebselemente als unabhängig voneinander regelbare Ölmotore ausgebildet sein können. Somit kann also auf der einen Seite mehr oder weniger Dünger als auf der anderen Seite ausgestreut werden.

In einer weiteren Ausführungsform ist in erfindungsgemäßer Weise vorgesehen, daß die Schleuderscheiben über einen regelbaren Antrieb angetrieben werden. Hierbei ist vorgesehen, daß der regelbare Antrieb als Ölmotor ausgebildet ist. Hierdurch läßt sich eine besonders vorteilhafte Antriebseinrichtung für die Schleuderscheiben herstellen. Wird nun die Ölmenge des Ölmotors konstant geregelt, werden die Schleuderscheiben mit einer konstanten Drehzahl angetrieben, so daß keine Abhängigkeit zwischen der Schleuderscheibendrehzahl und der Motordrehzahl des den Düngerstreuer übertragenden Schleppers besteht, wie dies bei dem Antrieb der Verteilorgane von der Zapfwelle des Schleppers üblich ist. Es ist somit möglich, Schlepper bei maximaler Streubreite im Teillastbereich zu fahren, was zur Kraftstoffeinsparung, Verschleiß- und Geräuschminderung führt. Desweiteren ergeben sich Vorteile hinsichtlich einer variableren Anbauhöhe gegenüber einer starren Antriebsverbindung. Die Ölmotore lassen sich über eine Fernbedienung vom Schleppersitz aus oder über eine elektronische Regeleinrichtung regeln.

In einer besonders bevorzugten Ausführungsform ist erfindungsgemäß vorgesehen, daß jeder Schleuderscheibe ein eigener Antriebsölmotor mit einer Regeleinrichtung zugeordnet ist. Infolge dieser Maßnahmen lassen sich die einzelnen Schleuderscheiben eines Düngerstreuers mit unterschiedlichen Drehzahlen antreiben, wodurch sich die Streubreite stufenlos zwischen 0 bis beispielsweise 24 m einstellen läßt. Dadurch, daß die einzelnen Schleuderscheiben mit unterschiedlichen Drehzahlen antreibbar sind, lassen sich auch beispielsweise unsymmetrische Streubilder herstellen, um sich so besser den zu bestreuenden Flächen anzupassen. Wird der Düngerstreuer beispielsweise in hügeligem Gelände in der Hanglage eingesetzt, läßt sich die dem Hang zugeordnete Streuscheibe mit einer höheren Drehzahl als die dem Tal zugeordnete Streuscheibe antreiben, so daß sich insgesamt ein symmetrisches Streubild ergibt.

Die stufenlose Einstellung der Antriebsdrehzahl der Schleuderscheiben gestattet eine bessere Berücksichtigung der gerade vorherrschenden Streuguteigenschaften des auszustreuenden Materials.

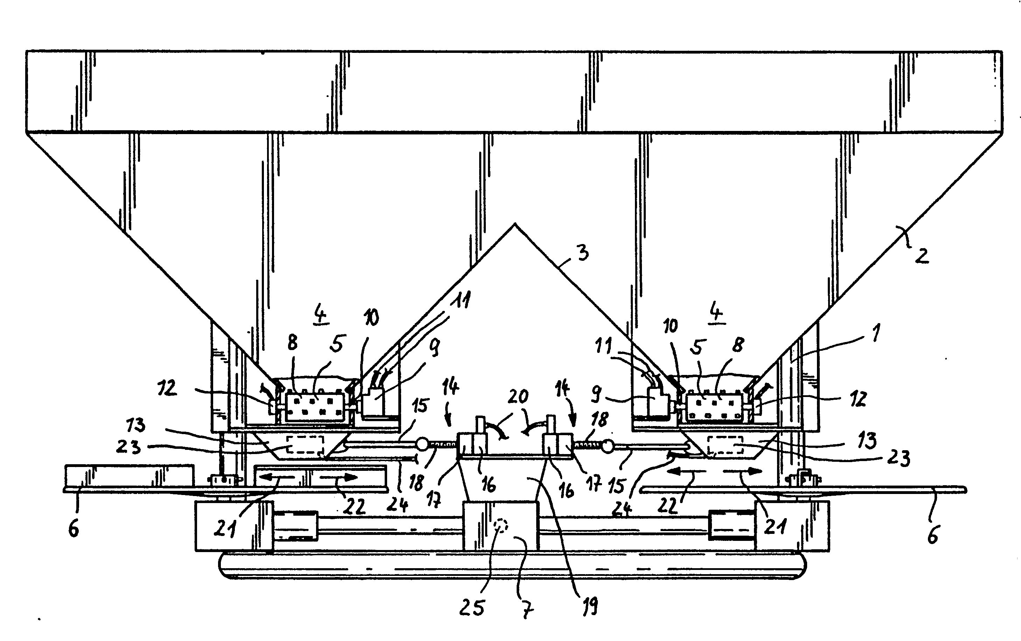

Weitere Einzelheiten der Erfindung sind der Beispielsbeschreibung und der Zeichnung zu entnehmen. Hierbei zeigt die Zeichnung den in erfindungsgemäßer Weise ausgebildeten Zentrifugaldüngerstreuer in Prinzipdarstellung in der Ansicht von hinten.

Der als Anbauschleuderstreuer ausgebildete Zentrifugaldüngerstreuer weist den Rahmen 1 auf, der auf seiner in Fahrtrichtung gesehenen vorderen Seite mit Dreipunktkupplungselementen zum Anbau an einen nicht dargestellten Schlepper ausgestattet ist. Weiterhin ist an dem Rahmen 1 der Vorratsbehälter 2 befestigt, der zwei durch das dachförmige Mittelteil 3 getrennte, trichterförmige Behälterteile 4 aufweist. Im unteren Bereich der trichterförmigen Behälterteile 4 ist jeweils die Dosiereinrichtung 5 angeordnet, die die Behälterteile 4 nach unten verschließt.

Unter den Dosiereinrichtungen 5 ist jeweils ein als Schleuderscheibe 6 ausgebildetes Verteilorgan angeordnet. Die Schleuderscheiben 6 werden über das Getriebe 7 von der Zapfwelle des den Anbauschleuderstreuer tragenden Schleppers ineinander entgegengesetztem Drehsinn angetrieben. Die Dosiereinrichtung 5 ist als Zwangsdosiersystem ausgebildet und besteht aus der Dosierwalze 8, die jeweils in den trichterförmigen Behälterteilen 4 angeordnet ist. Der Antrieb dieser Dosierwalzen 8 erfolgt jeweils über den Hydraulikmotor 9, der an der Antriebswelle 10 der Dosierwalze 8 angeflanscht ist. Über die Hydraulikleitungen 11 sind die Hydraulikmotore 9 mit dem Hydrauliksystem des nicht dargestellten Schleppers verbindbar. Über die Regelung der Ölzufuhr zu diesen Motoren 9 läßt sich die Drehzahl der Dosierwalzen 8 unabhängig voneinander einstellen und regeln, so daß die Dosierwalzen 8 sowohl mit gleichen als auch mit unterschiedlichen Drehzahlen antreibbar sind. Die jeweilge Drehzahl der Dosierwellen 8 wird mittels des Drehzahlaufnehmers 12, der jeweils an der Antriebswelle 10 angeordnet ist, erfaßt.

Zwischen der Dosiereinrichtung 5 und den Schleuderscheiben 6 ist jeweils das als Rutsche 13 ausgebildete Materialleitelement verschiebbar gelagert. Das von den Dosierwalzen 8 aus dem Vorratsbehälter 2 dosierte Material wird von den Rutschen 13 auf die Schleuderscheiben 6 geleitet. Die Rutschen 13 bestimmen den Aufgabeschwerpunkt des Materiales auf den Schleuderscheiben 6. Dieser Aufgabeschwerpunkt des Materiales auf der Schleuderscheibe 6 muß bei Veränderung der Ausbringmenge – durch Veränderung der Antriebsdrehzahl der Dosierwalzen 8 – auf der jeweiligen Schleuderscheibe 6 verlagert werden, um die Lage des Streusektors, über den die Materialpartikel abgeschleudert werden, unverändert beizubehälten. Hierdurch wird der sog. Mengeneffekt verhindert. Bei einer kleinen Ausbringmenge befindet sich der Aufgabeschwerpunkt näher bei der Scheibendrehachse als bei größeren Ausbringmengen. Es besteht eine Abhängigkeit zwischen der Ausbringmenge und der Lage des Aufgabeschwerpunktes des Materiales auf der Schleuderscheibe 6.

Zur Verstellung des Aufgabeschwerpunktes mittels der jeweiligen Rutschen 13 greift jeweils eine Verstelleinrichtung 14 an jeder Rutsche 13 an. Diese Verstelleinrichtungen 14 bestehen jeweils aus dem Verstellhebel 15, der mit dem elektrischen Verstellmotor 16 mit dem selbsthemmenden Untersetzungsgetriebe 17, welches die Verstellspindel 18 aufweist, verbunden ist. Die Verstelleinrichtungen 14 sind mittels der Halterung 19 an dem Getriebe 7 unter dem dachförmigen Mittelteil 3 befestigt. Die elektrische Verstellmotore 16 sind über die Kabel 20 mit einer nicht dargestellten elektronischen Steuer- bzw. Regeleinrichtung verbunden. In Abhängigkeit der Drehzahl der Dosierwalzen 8 bzw. der Ausbringmengen erhalten die Verstellmotore 16 Impulse von der Steuer- bzw. Regeleinrichtung, so daß Rutschen 13 eine Verlagerung des Aufgabeschwerpunktes des auf die Schleuderscheiben 6 auftreffenden Materialstromes in der Weise vorgenommen wird, so daß der sog. Mengeneffekt verhindert wird. Bei kleineren Ausbringmengen wird die jeweilige Rutsche 13 in Pfeilrichtung 21 und bei größeren Ausbringmengen in Pfeilrichtung 22 verstellt, so daß sich der Aufgabeschwerpunkt des Materials auf den Schleuderscheiben 6 bei großen Ausbringmengen näher an der Schleuderscheibenaußenkante als bei kleinen Ausbringmengen befindet.

Die elektronische Steuer- bzw. Regeleinrichtung kann mit einem nicht dargestellten Wegstrecken- bzw. Fahrgeschwindigkeitssensor verbunden sein, der Impulse von dem zurückgelegten Weg bzw. über die tatsächliche, momentane Fahrgeschwindigkeit an die Steuer- bzw. Regeleinrichtung liefert. Infolge dieser Maßnahme ist es möglich, daß in Abhängigkeit der Fahrgeschwindigkeit eine Veränderung der Ausbringmenge vorgenommen werden kann, so daß die Ausbringmenge pro Flächeneinheit bei unterschiedlichen Fahrgeschwindigkeiten konstant gehalten wird.

Weiterhin sind in den Rutschen 13 die Sensoren 23 zur Erfassung der tatsächlichen momentanen Ausbringmenge angeordnet. Diese Sensoren 23 sind über die Kabel 24 ebenfalls mit der Steuer- bzw. Regeleinrichtung verbunden. Diese Steuer- bzw. Regeleinrichtung kann so ausgelegt sein, daß aufgrund der von den Sensoren 23 ermittelten Impulse über die tatsächliche Ausbringmenge die Rutschen 13 über die mit der Steuer- bzw. Regeleinrichtung verbundenen Verstelleinrichtungen 14 so verstellt werden, daß jeweils in Abhängigkeit der Größe der Ausbringmenge der optimale Aufgabeschwerpunkt des Materiales auf die Schleuderscheiben 6 gewährleistet ist. Hierdurch werden die Rutschen 13, die die Lage des jeweiligen Aufgabeschwerpunktes des Materiales auf den Schleuderscheiben 6 bestimmen, in Abhängigkeit der Ausbringmenge automatisch verstellt.

Der Antrieb der Schleuderscheiben 6 des in der Zeichnung dargestellten Zentrifugaldüngerstreuers erfolgt über das Getriebe 7, wobei die Eingangswelle 25 des Getriebes 7 über eine Gelenkwelle von der Schlepperzapfwelle angetrieben wird. Es ist jedoch auch möglich, die Eingangswelle 25 des Getriebes 7 von einem Hydraulikmotor antreiben zu lassen, wobei dieser Hydraulikmotor an das Hydrauliksystem des den Zentrifugaldüngerstreuer tragenden Schleppers anzuschließen ist. Hierdurch lassen sich die Drehzahlen der Schleuderscheiben 6 stufenlos über den regelbaren Hydraulikmotor einstellen. Weiterhin ist es auch möglich, jeder einzelnen Schleuderscheibe 6 einen eigenen Hydraulikmotor mit einer Regeleinrichtung zuzuordnen, so daß die Schleuderscheiben 6 sowohl mit gleicher Umfangsgeschwindigkeit als auch mit verschiedenen Umfangsgeschwindigkeiten unabhängig voneinander antreibbar sind. Die jeweilige Drehzahl der einzelnen Schleuderscheiben 6 wird über einen nicht dargestellten Drehzahlaufnehmer ermittelt und an die Steuer- bzw. Regeleinrichtung geliefert, so daß der Schlepperfahrer jederzeit über die Drehzahl der Schleuderscheiben 6 informiert wird.

**Ansprüche**

1. Zentrifugaldüngerstreuer, vorzugsweise Anbauschleuderstreuer, insbesondere für gekörnte Düngemittel, mit einem Vorratsbehälter (2) und einer Verteileinrichtung mit zumindest zwei antreibbaren, als Schleuderscheiben (6) ausgebildeten Verteilorganen, denen die auszubringenden Düngepartikel über eine Dosiereinrichtung (5) in einstellbaren Mengen zuführbar sind, wobie die Dosiereinrichtung (5) als antreibbare Dosierwalze (8) oder Dosierband ausgebildet ist, welche über ein regelbares Antriebselement (9) antreibbar ist, und wobei jeder Schleuderscheibe (6) zumindest eine eigene Dosierwalze (8) oder Dosierband zugeordnet ist, dadurch gekennzeichnet, daß das Antriebselement (9) derart ausgebildet ist, daß jede Dosierwalze (8) oder jedes Dosierband unabhängig voneinander antreibbar ist und daß die Dosierwalzen (8) oder Dosierbänder mit gleicher Umfangsgeschwindigkeit oder mit verschiedenen Umfangs geschwindigkeiten unabhängig voneinander antreibbar sind.

2. Schleuderstreuer nach Anspruch 1, dadurch gekennzeichnet, daß für jede Dosierwalze (8) oder jedes Dosierband ein eigenes regelbares Antriebselement (9) vorgesehen ist.

3. Zentrifugaldüngerstreuer nach Anspruch 2, dadurch gekennzeichnet, daß jeder Dosierwalze (8) oder Dosierband jeweils ein eigener Ölmotor (9) zugeordnet ist.

4. Zentrifugaldüngerstreuer nach Anspruch 3, dadurch gekennzeichnet, daß die beiden Ölmotoren (9) unabhängig voneinander regelbar sind.

5. Zentrifugaldüngerstreuer nach Anspruch 1, dadurch gekennzeichnet, daß die Schleuderscheiben (6) über einen regelbaren Antrieb angetrieben werden.

6. Zentrifugaldüngerstreuer nach Anspruch 5, dadurch gekennzeichnet, daß der regelbare Antrieb als Ölmotor ausgebildet ist.

7. Zentrifugaldüngerstreuer nach Anspruch 6, dadurch gekennzeichnet, daß jeder Schleuderscheibe (6) ein eigener Antriebsölmotor mit einer Regeleinrichtung zugeordnet ist.

**Claims**

1. Centrifugal fertilizer distributor, preferably an attachment-type centrifugal distributor, more especially for granular fertilizers, including a hopper (2) and a distributing arrangement provided with at least two drivable distributing members, which are in the form of centrifugal discs (6) and to which the fertilizer particles to be distributed are suppliable in adjustable quantities through the intermediary of a metering arrangement (5), the metering arrangement (5) being in the form of a drivable metering roller (8) or metering belt, which is drivable through the intermediary of a controllable drive mechanism (9), and wherein each centrifugal disc (6) has at least one particular metering roller (8) or metering belt associated therewith, characterised in that the drive mechanism (9) is so adapted that each metering roller (8) or each metering belt is drivable independently of each other, and the metering rollers (8) or metering belts are drivable independently of each another at the same circumferential speed or at different circumferential speeds.

2. Centrifugal distributor according to claim 1, characterised in that one particular, controllable drive mechanism (9) is provided for each metering roller (8) or each metering belt.

3. Centrifugal fertilizer distributor according to claim 2, characterised in that each metering roller (8) or metering belt has its own hydraulic motor (9) associated therewith.

4. Centrifugal fertilizer distributor according to claim 3, characterised in that the two hydraulic motors (9) are controllable independently of each other.

5. Centrifugal fertilizer distributor according to claim 1, characterised in that the centrifugal discs (6) are driven by a controllable drive means.

6. Centrifugal fertilizer distributor according to claim 5, characterised in that the controllable drive means is in the form of a hydraulic motor.

7. Centrifugal fertilizer distributor according to claim 6, characterised in that each centrifugal disc (6) has its own hydraulic drive motor, together with a control device, associated therewith.

## Revendications

1. Distributeur centrifuge d'engrais de préférence distributeur porté notamment pour des engrais à l'état de granulés, distributeur comportant un réservoir d'alimentation (2) et une installation de répartition avec au moins deux organes de répartition en forme de disques centrifuges (6) susceptibles d'être entraînés, qui reçoivent les particules d'engrais à distribuer selon des quantités réglées par un dispositif de dosage (5), le dispositif de dosage (5) étant conçu comme cylindre ou ruban de dosage (8) susceptibles d'être entraînés et qui sont entraînés par un élément d'entraînement (9) réglable, un cylindre de dosage (8) ou une bande de dosage, indépendants étant associés à chacun des disques d'épandage, caractérisé en ce que l'élément d'entraînement (9) est conçu pour que chaque cylindre de dosage (8) ou ruban de dosage puisse être entraîné indépendamment et que les cylindres de dosage (8) ou les bandes de dosage soient entraînés à la même vitesse périphérique ou à des vitesses périphériques différentes, indépendamment l'un de l'autre.

2. Distributeur centrifuge d'engrais selon la revendication 1, caractérisé par un élément d'entraînement (9) réglable séparément, associé à chaque cylindre de dosage (8) ou chaque bande de dosage.

3. Distributeur centrifuge d'engrais selon la revendication 2, caractérisé par un moteur hydraulique (9) indépendant associé à chaque cylindre ou bande de dosage (8).

4. Distributeur centrifuge d'engrais selon la revendication 3, caractérisé en ce que les deux moteurs hydrauliques (9) sont réglables indépendamment l'un de l'autre.

5. Distributeur centrifuge d'engrais selon la revendication 1, caractérisé en ce que les disques d'épandage (6) sont entraînés par l'intermédiaire d'un moyen d'entraînement réglable.

6. Distributeur centrifuge d'engrais selon la revendication 5, caractérisé en ce que l'entraînement réglable est un moteur hydraulique.

7. Distributeur centrifuge d'engrais selon la revendication 5, caractérisé par un moteur hydraulique d'entraînement, indépendant, équipé d'un dispositif de régulation, est associé à chaque disque centrifuge (6).